(19)

Europäisches
Patentamt
European
Patent Office
Office européen
des brevets

(11)     **EP 3 885 867 A1**

(12)     **EUROPEAN PATENT APPLICATION**

(43) Date of publication:
    **29.09.2021   Bulletin 2021/39**

(21) Application number: **20166258.2**

(22) Date of filing: **27.03.2020**

(51) Int Cl.:
    **G05D 1/02** *(2020.01)*          **B60W 30/00** *(2006.01)*
    **G08G 1/00** *(2006.01)*          **G01C 21/00** *(2006.01)*

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(71) Applicant: **embotech AG**
    **8005 Zürich (CH)**

(72) Inventors:
    • **DANGEL, Manuel**
      **8057 Zürich (CH)**

    • **HUG, Markus Stephan**
      **8908 Hedingen (CH)**
    • **LONGO, Stefano**
      **8005 Zürich (CH)**
    • **DOMAHIDI, Alexander**
      **8005 Zürich (CH)**

(74) Representative: **Ragot, Sébastien Pierre**
    **E. Blum & Co. Ltd.**
    **Patent and Trademark Attorneys VSP**
    **Vorderberg 11**
    **8044 Zürich (CH)**

(54)     **METHOD AND SYSTEM FOR CONTROLLING AUTONOMOUS OR SEMI-AUTONOMOUS VEHICLE**

(57)     A method for controlling an autonomous or semi-autonomous vehicle comprises: obtaining, information describing a roadway from a starting position to make progress along the roadway between a left edge and a right edge; transforming the information describing the roadway in a Frenet-Serret frame; defining a plurality of grid lines along the roadway at spaced locations; determining corridors in space and time coordinates; determining a trajectory within the suitable corridor through mathematical optimization for each grid line in time generating a convex (or quasi-convex) and continuous time function in the drivable space; and transforming the convex (or quasi-convex) and continuous time function into a motion planning trajectory in Euclidian coordinates. Furthermore, this method applies different methods in determining the development of the vehicle states over time for high and low velocities of the vehicle.

**FIG. 1**

**Description**

TECHNICAL FIELD

The present invention relates to a method and system for controlling autonomous or semi-autonomous vehicle.

PRIOR ART

US 9,567,915 B1 discloses a system and method for controlling autonomous or semi-autonomous vehicle using a model of the motion of the vehicle that includes an uncertainty. The method samples a control space of possible control inputs to the model of the motion of the vehicle to produce a set of sampled control inputs and determines a probability of each sampled control input to move the vehicle into state satisfying constraints on the motion of the vehicle.

US 9,645,577 B1 generates a finite set of candidate trajectories of a vehicle that begin at a location of said vehicle as of a given time. The candidate trajectories are based on a state of the vehicle and on possible behaviors of the vehicle and of the environment as of the location of the vehicle and the given time. A putative optimal trajectory is selected from among the candidate trajectories based on costs associated with the candidate trajectories. The costs include costs associated with violations of rules of operation of the vehicle. The selected putative optimal trajectory is used to facilitate the operation related to control of the vehicle.

US 2015/346723 A1 discloses a method for controlling an autonomous vehicle through obtaining information describing a current state of the autonomous vehicle and a goal state of the autonomous vehicle; determining an initial vehicle trajectory from the current state of the autonomous vehicle to the goal state of the autonomous vehicle; and determining, by the one or more processors, an optimized vehicle trajectory based the initial trajectory and a velocity profile by applying numerical minimization to minimize a trajectory length value and a lateral acceleration value.

US 2015/353082 A1 provides a method for automated lane centering and/or lane changing purposes for a vehicle traveling on a roadway that employs roadway points from a map database to determine a reference vehicle path and sensors on the vehicle for detecting static and moving objects to adjust the reference path. The method includes reducing the curvature of the reference path to generate a reduced curvature reference path that reduces the turning requirements of the vehicle and setting the speed of the vehicle from posted roadway speeds from the map database. The method also includes providing multiple candidate vehicle paths and vehicle speeds to avoid the static and moving objects in front of the vehicle.

US 2015/345959 A1 discloses a method for controlling an autonomous vehicle through obtaining information describing a roadway; defining a plurality of layers along the roadway between a starting position and a goal position, each layer having a first width, and each layer having a plurality of nodes that are spaced from one another transversely with respect to the roadway within the first width; and determining a first trajectory from the starting position to the goal position, by minimizing a cost value associated with traversing the layers.

The article "Optimization-based autonomous racing of 1:43 scale RC cars " by Liniger, Domahidi and Morari, published in Special Issue: Predictive Control for Embedded Systems; in Optimal Control, Volume 36, Issue 5, September/October 2015, uses the Model of a Predictive Contour Control idea to solve the problem of autonomous racing and obstacle avoidance. Within the paper a grid is generated using previous trajectories. Only lower and upper bounds are used to define constraints which also only allows to optimize for the shortest path.

SUMMARY OF THE INVENTION

The present invention relates to a method for steering a vehicle along a path in a structured environment where lane information can be derived. The vehicle has the goal to make progress along the road and must avoid obstacles by acting on the steering, accelerator or brakes.

Based on the prior art, it is an object of the invention to improve the controlling result, especially improving the use of processor resources, allowing either calculation with less processing power or improved and more precise calculations; in other words the resulting driving performance is improved.

It is noted that in the prior art as US 2015/353082 A1 their segments is a way to provide entry points for a database of the map. Each segment is associated with information such as road curvature. This is different to the grid as used in the present invention as a way of discretizing the space longitudinally in order to approximate the continuous space into a discrete space with finite number of points. The grid/discretization method according to the invention is such that a higher density of grid points are taken where the vehicle speed is predicted to be lower (e.g. when the road curves) so that the method indirectly embeds time information.

It is noted that in the prior art US 2015/345959 A1 the lines according to their method are needed to define "nodes". This is a discretization of the space longitudinally and laterally, and such discretization is uniform (i.e. independent from vehicle speed). The path planner will then decide which node to move to in order to make progress. In the method according to the invention, the space is only discretized longitudinally (leaving the lateral distance continuous, i.e. no approximations laterally) and the discretization steps are nonuniform and proportional to vehicle speed.

This method solves the structured environment autonomous driving motion planning problem. It is optimization-based, deterministic and features a detailed dynamic vehicle model to generate dynamically feasible trajectories at least at a rate of 20 Hz.

The general motion planning problem with moving obstacles is nonlinear and highly non-convex.

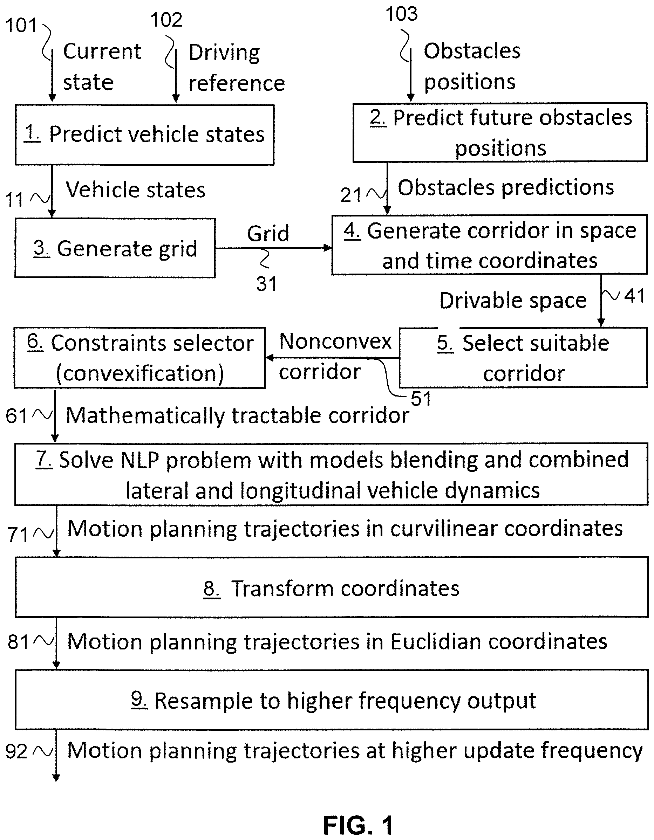

This method divides the solution into two separate optimization problems: a global optimization in a low dimensional state-input space, which delivers "convexified" or "quasi-convexified" obstacle avoidance constraints - a corridor to drive in - and an initialization in the area of a local minimum (steps with reference numerals 1 to 6 in Fig. 1). As a second step, an efficient Nonlinear Programming (NLP) algorithm solves for the optimal trajectory of an accurate vehicle model within the given corridor (step with reference numeral 7 in Fig. 1). The model used is a velocity-dependent blend of at least two models.

The wording "model" is a set of data defining a vehicle. In the present specification several known models are mentioned as the so-called bicycle model, the Pacejka tire model and for low speeds the "kinematic model" can be used in various embodiments. These models are used in the above mentioned second optimization step with reference numeral 7 in Fig. 1.

However, the model used further comprises additional data entries which can be taken from the group encompassing the mass of the vehicle, the minimum steering radius, but also the class of vehicle like lorry, SUV, small car, sports car, limousine, since some very simple data from the model will be used in the first step of the optimazation, i.e. in steps 1 to 6 from Fig. 1.

Both steps together allow the motion planning optimization problem to be solvable and to be executed quickly enough for practical use. Step one relating to the "corridor" does this by reducing the number of and transforming (convexify) the inequality constraints the optimizer needs to deal with. Step two as related to "model blending" does this by reducing the number of equality constraints the optimizer needs to deal with. Furthermore, model blending allows the seamless and necessary use of two different models: a dynamic model, which is high-fidelity at high speeds but makes the problem intractable at low speeds because of singularities; a kinematic model, which removes the singularities at low speed.

At high velocities the model used is a nonlinear bicycle vehicle model with simplified Pacejka tire models, which is defined as the standard Pacejka "Magic Formula" with the curvature coefficient parameter (usually called "e") set to zero. The model has eight states (longitudinal force/acceleration, steering angle, $v\_x$, $v\_y$, yaw-rate, s, w, relative heading) and two control inputs (longitudinal jerk, steering rate). $v\_x$ is the forward longitudinal velocity of the vehicle 90, $v\_y$ is the lateral velocity of the vehicle 90, s is the position of vehicle 90 along the path (in curvilinear coordinates) and w is the position of vehicle 90 perpendicular to the path (in curvilinear coordinates). At low velocities the vehicle model used is a simpler kinematic model with four states only (x and y coordinates, velocity and heading) and no tire dynamics. This model allows to deal with mathematical singularities encountered at low speeds by the high-fidelity model. At medium speeds, a blend of the two model is used in such a way that the transition is seamless and that the difference in number of states is automatically catered for.

Due to the structured environment of most roads, the coordinate system is chosen to be a Frenet-Serret frame (curvilinear coordinates, TNB frame), defined by a reference along the road. This simplifies the optimization formulation since an objective is to minimize time to travel along the direction of the road and minimize the lateral deviation from the center. Especially advantageous is the fact that the distance to obstacles can be handled as in longitudinal and lateral distance within lanes even though the road is curved. In Euclidean coordinates, this would be very difficult. The downside is the need for a coordinate transform.

The motion planning problem is discretized on a grid in space. In the first step, which is step 3 in the method diagram, time is discretized as well. In the NLP solver, the longitudinal distance along the road is fixed, while time is a variable. The suitable corridor named corridor is a feasible drivable corridor, i.e. a corridor which fulfills the boundary conditions.

The invention has the further advantage not to generate a huge number of candidate trajectories and then selecting one, but it is based on the insight to use the concept of a widest possible corridor of infinite trajectories from which one optimal trajectory is calculated.

The invention also comprises a system for controlling an autonomous or semi-autonomous vehicle, comprising a control unit having one or more processors, a memory stocking at least a first lower velocity vehicle model and a second higher velocity vehicle model, wherein the control unit is adapted to obtain information describing a roadway from a starting position to make progress for said autonomous or semi-autonomous vehicle along the road between a left edge and a right edge and further comprises a software program product for executing any one method according to one of the embodiments according to the invention.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1     shows a block diagram of a motion planning method according to an embodiment of the invention;

Fig. 2     shows the visualization of the generate grid block of Fig. 1, i.e. the transformation of a real environment into a transformed calculated environment;

Fig. 3     shows the visualization of the corridor generation in space and time coordinates block of Fig. 1 based on the generated grid block of Fig. 2;

Fig. 4     shows the visualization of the corridor selection block of Fig. 1 based on the generated corridors as shown in Fig. 3; and

Fig. 5     shows the visualization of the convexification block of Fig. 1 based on the selected corridor as shown in Fig. 4.

DESCRIPTION OF PREFERRED EMBODIMENTS

The invention is related to a motion planning method and Fig. 1 shows as an overview a block diagram relating to such a motion planning method according to an embodiment of the invention.

Since the method is related to controlling autonomous or semi-autonomous vehicles, the computer systems with the processors to execute the method is already provided with a global model of the vehicle to be controlled. In fact, the global model of the input comprises at least two sub-models for the vehicle, one sub-model for a low velocity and a further different sub-model for high velocity. Such a sub-model of the vehicle comprises data relating to a well known model as the kinematic model (for low velocities), a Pacjeka model etc.. The global model for a vehicle furthermore includes the above mentioned additional parameter, called the model parameter, preferably only one or two parameter, for a "class" like behaviour which can be a class of vehicles or a physical property as steering capacity or the mass of the vehicle. If the data of the overall global model is organized as a data vector in the storage of the computer then, it will comprise a slow velociy model part, a high velocity model part and a simplified class model or parameter model part, wherein class also means physical properties as the mass and not necessarily a vehicle class as lorrry or SUV. In both cases this parameter model part provides input for the method as well as will be explained below.

The motion planning method provides the creation of safe and feasible corridors in space and continuous time. Generating such corridors is mathematically nontrivial as it involves a coordinate transformation, the generation of a nonuniform grid, optimized for lane geometry, generation of a corridor in one space and one time dimension, selection of a suitable corridor via the solution of an optimization problem e.g. via dynamic programming, A* or Dijkstra's algorithms as examples for an heuristic search approach and the approximation by continuous functions, in time, to define the constraints (also called convexification). The function of each block in Fig. 1 is as follows.

The block with the reference numeral 1 is related to the prediction of vehicle states. Here, the current measurements and current states 101 and driving reference information 102 are used to estimate, as output, all the vehicle states 11 necessary to solve the motion planning problem. The current state 101 comprises all vehicle related information like dimension, position, velocity, current acceleration, steering direction etc.. The driving reference information 102 comprises information about the driving possibilities of the vehicle like possible accelerations (positive and negative), possible steering, and comfort levels of such values, etc..

The block with the reference numeral 2 is related to the prediction of future obstacles positions. Here, information about dynamic obstacles 103, especially positions, are used to generate a prediction of their positions in the future. These obstacles predictions 21 are based on the analysis of the obstacles as moving or standing. Moving prediction can comprise acceleration and steering predictions, if the obstacles are pedestrians, bicycles, cars etc..

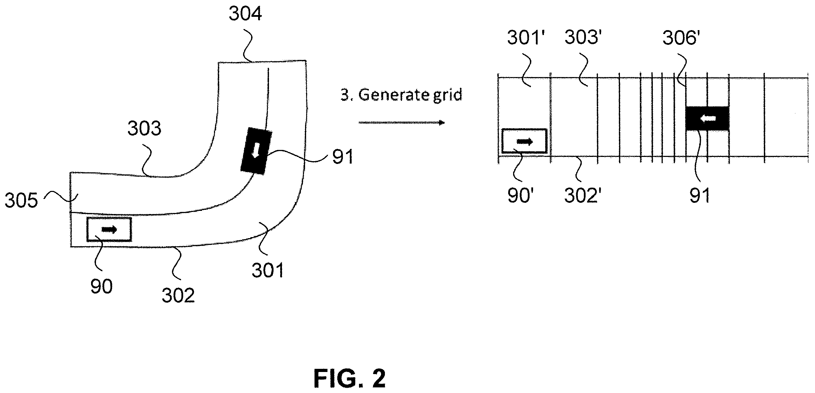

The block with the reference numeral 3 is related to a grid generation. Here, the surface the vehicle is driving on, e.g. a road, is discretized in space and its coordinates are transformed to curvilinear ones as shown in Fig. 2. In other words, the vehicle states 11 as entry values are transformed into a grid 31 as output value. The word value comprises a plurality of values relating to the grid itself and the vehicle evolving in it. The grid 31 is calculated on the basis of the vehicle states but usually only a general - speed independent part of the global model, especially from the parameter model part.

Fig. 2 shows the visualization of the generate grid block of Fig. 1, i.e. the transformation of a real environment into a transformed calculated and discretized environment. The discretization is performed such that only the necessary number of points is selected. Of course, it is possible to choose more points, but the problem complexity will increase unnecessarily, which necessitates more computing power. Too few points, and the problem approximation will lead to poor performance. The location of the discretization points is calculated using information of the road curvature, which is also an indication of the vehicle speed physical limits along that path and comfort limits, e.g. minimal lateral acceleration, based on the model parameter part of the global vehicle model.

Fig. 2 shows on the left side the road 301 with a right edge 302 and a left edge 303, on which drives a vehicle 90. On the road portion 301 is shown an obstacle 91. Here, the obstacle 91 is another vehicle driving in opposite direction to the vehicle 90. In other situations, the obstacle can be a standing obstacle as e.g. a lane divider or a vehicle driving in the same direction as vehicle 90 but slower. Fig. 2 shows a road portion 301 as the space which is "visible" to the method and system according to the invention. Therefore, the road portion 301 is limited in forward direction by forward edge 304, connecting the left edge 303 with the right edge 302. The back edge 305 can be provided directly behind the vehicle 90 but can also take into consideration overtaking vehicles. The back edge 305 closes the road portion 301 into a closed surface.

The grid generation 3 transforms the road 301 into a transformed road 301' with a transformed right edge 302' and a transformed left edge 303'. The grid data further comprises a plurality of grid line 306. The grid lines 306 are perpendicular to a fictious line which is the reference in Fig. 1. This line can be equivalent to the edges 302' and 303', but this is e.g. with a narrowing or enlarging road not always possible. The grid lines 306 are located in distances one from another which depend on the importance of lane choice. Apparently, the grid lines 306 are provided more dense near in front of the obstacle 91 (in the sense of move of the obstacle 91) than behind or close to the vehicle 90. However, the grid is denser around the obstacle 91 when we expect a lower vehicle speed, due to the curvature of the road.

The block with the reference numeral 4 is related to the generation of a corridor in space and time coordinates. Input data are the obstacles predictions 21 as well as the grid data 31. The solution comprises data relating to a drivable space 41. Here, a first corridor is generated, which indicates all possible locations where the vehicle could in theory go, or fit, without other considerations.

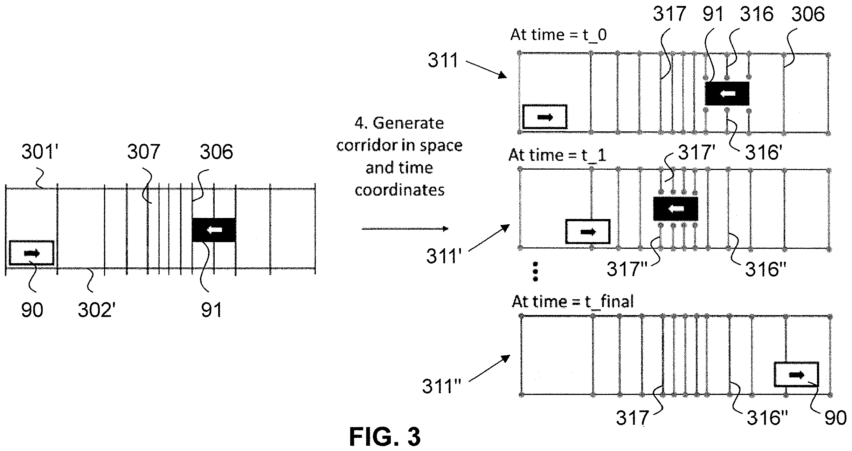

Fig. 3 shows the visualization of the generation of a corridor in space and time coordinates block of Fig. 1. On the left-hand side of Fig. 3, a representation of the input data, the grid data 31 is shown, e.g. a data set only based on the closed surface road 301' with transformed right edge 302' and transformed left edge 303'. Two specific grid lines 306 and 307 are marked. The method calculates a corridor in space and time coordinates and the result are shown on the right-hand side at three exemplary points in time grids 311, 311' and 311".

In block 4 the movement of vehicle 90 is calculated and predicted as moving towards the right side through time from the top representation to the bottom representation. The original obstacle 91 position divides a grid line 306 into interrupted grid portion 316 and interrupted grid portion 316' with in between the dimension of the obstacle 91. At time t1, the obstacle 91 is predicted to have moved and the interrupted grid portions 316 and 316' are replaced by the entire grid line 316". On the other side, the predicted movement of obstacle 91 provides an originally complete grid line 317 into a separated grid line 317' and 317" on both sides of the obstacle 91. When the obstacle would be near the edge 302' or 303' then it is possible that there is only one shorter interrupted grid line on one side. In short, in block 4, the data related to the road 301' is calculated over time and for each time slot of e.g. 20 ms there is a sequence of grid lines 306, 316, 316', 317, to 306, 316", 317', 317" to 316", 317.

The block with the reference numeral 5 is related to the selection of a suitable corridor by solving the above-mentioned optimization problem, e.g. by using dynamic programming, A* or Dijkstra's algorithms, i.e. by applying a heuristic search. Here, the solution of the optimization problem and underlying algorithm is used to find a suitable corridor, one that is feasible, safe and that gives the largest amount of options (largest solution space). The optimization problem has a cost function and constraints. The cost function is to maximize or find the largest space-time volume. The constraints are the vehicle dynamics, input through the parameter model part, and the obstacles. The data relating to the nonconvex corridor 51 is the output of this block. Most importantly, this refined corridor greatly simplify the search space by converting a global optimization problem to a local optimization problem suitable for an NLP solver such as the open source IPOPT or proprietary one FORCES PRO among many widely available.

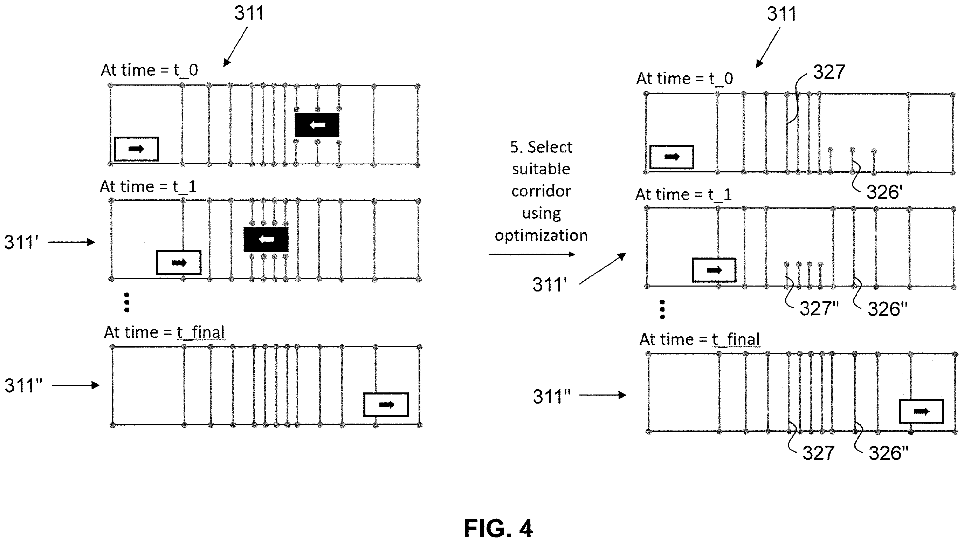

Fig. 4 shows the visualization of the selection of suitable corridor using optimization from the data set and space and time coordinates block of Fig. 1. On the left side are shown the data sets from Fig. 3 at grids 311, 311' and 311" for times $t_0$, $t_1$ and $t_{final}$. The method calculates a suitable corridor, which selects the lower portion 326' at t0 and the lower portion 327" at $t_1$, whereas at $t_{final}$, no road portion 326" and 327 are separated.

The block with the reference numeral 6 is related to convexification or constraints selector. Here, non-convex constraints are "convexified" to improve the performance of the NLP solver. In this step, the discrete corridor points are approximated by a convex or quasi-convex continuous function in time domain. The data relating to said mathematically tractable corridor 61 is the output of this step.

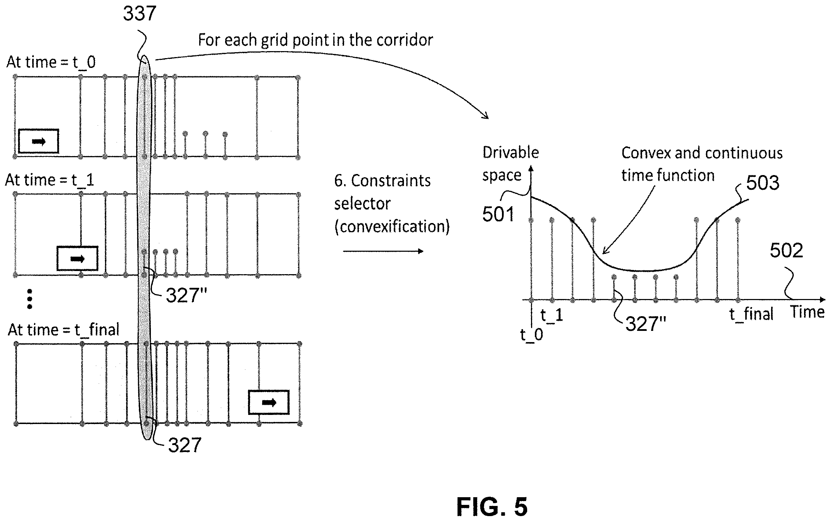

Fig. 5 shows the visualization of the convexification, which means that the different grid lines or grid portions as 327" and 327 at the same length position between the left and right edge over time from $t_0$ over $t_1$ to $t_{final}$ is mapped onto a curve 503 over time 502, wherein the y-axis reflects the drivable space 501 over time. It can be seen that the calculation not only takes into consideration the allowed space over the length of grid portion 327" but calculates a convex (or quasi-convex) and continuous function. The step of convexifications means that the grid space is used to calculate a convex (or quasi-convex) and continuous function which is the best input for the next step. It is noted that this convexification is not influenced by model parameters.

The block with the reference numeral 7 is a block in view of the planning method according to the invention. It is preferred to apply this block 7 within the framework of a movement planning solution for various speeds of the vehicles. It is related to the solution of the NLP problem with models blending and lateral and longitudinal vehicle dynamics. The input for this block is the mathematically tractable corridor 61 as data from the representation of Fig. 5 leading with the solution of the NLP problem as output of this block 7 to motion planning trajectories in curvilinear coordinates 71.

The block with the reference numeral 8 is related to the transformation of coordinates. The output of this block 8 is related to data of motion planning trajectories in Euclidian coordinates 81, i.e. a back transformation from the Frenet-Serret coordinates used starting from the grid generation block 2.

Finally, the block with reference numeral 9 is related to the resampling of the output of block with reference numeral 8. Because of the inability to predict the exact time it will take to solve the NLP in block 7, the output of block 7, and consequently the output of block 8, will not be at a constant frequency (i.e. the output rate is not fixed). To allow for a constant frequency output of any arbitrary resolution and a higher update frequency rate, we have introduced block 9 which perform a resample of the output of block 8 to any arbitrary frequency (possibly higher). Block 9 will interpolate the output of block 8 using the exact vehicle model to calculate the trajectory points that exist between the trajectory points outputted by block 8. The advantage of this step is the ability to support any resolution output. The motion planning trajectories 92 can be updated at a higher frequency.

The application of block 7 is preferable for the following points:

- To be safe at the limits of handling (high speed or low friction) it is necessary to take into account the complex and nonlinear mathematical models to describe the vehicle dynamics (especially of the tires, but also suspensions, weight transfer, etc.).
- To do path planning with complex/nonlinear models for the vehicle dynamics, obtaining results continuously is mandatory. Usually at least every 20 milliseconds a solve should be available, as the vehicle progresses, which relates to a complex mathematical optimization problem.
- Such complex optimization problems cannot currently be solved quickly enough (e.g. within 20 ms) in standard vehicle computers for practical use, so the above shown method of blocks 1 to 6 and 8 can only be applied when the speed is always low or the speed is always high. Therefore, an invention is disclosed as follows, relating to a method to solve said complex problem fast enough for practical use.

Based on the assumption of blocks 1 to 6 and 8, i.e. decomposition of the problem into two subproblems with i.) generate a safe and feasible drivable corridor in space and continuous time coordinates and ii) find an optimal path/trajectory within the corridor.

The features of this method comprises model blending in order to: i) deal with mathematical singularities when solving the mathematical optimization problem and ii) only use the minimum necessarily complex mathematical vehicle model. Model blending means choosing from the global model the adapted velocity model or - in a transition region - a combined velocity model as explained below.

Block 7 is related to determining the solution of the NLP problem with model blending and combined lateral and longitudinal vehicle dynamics. The advantages are eliminating mathematical singularities (analogous to divisions by zero) at low velocities while allowing to use of more accurate models at high velocities. Furthermore, this proposal allows the solution of a more manageable mathematical optimization problem by eliminating unnecessary computations with the advantage of increased computational speed. A cost function is defined to solve the NLP problem in block 7. The NLP solver minimizes this cost function. The cost function, among other terms, includes a cost proportional to the inverse of the distance to other vehicles/obstacles multiplied by the relative velocity with the other vehicles/obstacles. This means that the cost is high when the relative velocity is high and/or when the distance is small. In this way, in order to minimize the cost function, the NLP solver needs to either reduce the relative velocity (normally by reducing the controlled vehicle velocity) or reduce the distance (by allowing more clearing space to the vehicle/obstacles where their relative velocity is higher) or both.

The two models are to be blended smoothly, i.e. avoiding jumps when transitioning from a model to another. This smooth transfer is achieved through application of the equation

$$dx/dt = s(v)\, f\_1(x,u) + (1-s(v))f\_2(x,u)$$

where v is the vehicle absolute velocity, x are the vehicle states, u are the vehicle inputs and f_1 and f_2 are the two functions describing the vehicle models to be blended. Furthermore, s(v) is a specific step function that is not a typical sigmoid activation function. Such function is defined as

$$s(v) = 0.5 + 0.5 \sin ( \min (0.5\pi , \max (-0.5 \pi , v - v\_blend) ) )$$

where "sin" is the sine function, "min" is the minimum operator, "max" is the maximum operator, $\pi$ is Archimedes constant (i.e. 3.14159...), and "v_blend" is the parameter that defines at which velocity the blending will take place.

Traditional sigmoid functions asymptotically converge to zero or one, meaning that both models would be always active. The present s(v) function will be exactly zero for some small velocities v and exactly 1 for some large velocities v.

A different modified sigmoid function with two threshold velocities can be used as well. When $v\_1$ is a lower threshold velocity, $v\_2$ is an upper threshold velocity, $v\_max$ the maximum reachable velocity of the vehicle and $0 < v\_1 < v\_2 < v\_max$, then, in an embodiment s(v) = 0 for $v <= v\_1$, s(v) = 1 for $v >= v\_2$ and s(v) = $1/(1+e^x)$.

In all cases, the modified sigmoid function ensures that in the main cases of slow or high velocity only the relevant model is used since the input of the other model is excluded by the multiplier 0 as parameter from the speed indication and only in the transition zone for a reduced interval of velocity between the two thresholds, the blending takes place in the sense that both models contribute to the result.

Such a blended model is only used in block 7 in Fig. 1. As mentioned above, only parameter model parts data are used in blocks 3 or 5 without reference to the velocity models in the global vehicle model.

If the blended model is used with three different velocity bands, the third having the function $f\_3(x,u)$ then beside the above mentioned first modified sigmoid function for the switch between the first and the second model around threshold velocities $v\_1$ and $v\_2$ or blending velocity $v\_blend$ a second modified sigmoid function $s2(v)$ is applied, especially in a multiplication with the first modified sigmoid function, for a similar blending threshold velocity to switch the value $s2(v)$ between 0 and 1 with the equation:

$$dx/dt = [s(v) \, f\_1(x,u) + (1-s(v))f\_2(x,u)](1-s2(v)) + s2(v) \, f\_3(x,u).$$

The second novel feature within this second part of the invention is related to safe and feasible corridors creation in space and continuous time. It is advantageous to reduce the mathematical optimization problem such that a path can be found in real-time (less than 20 ms). It is necessary to solve a global, coarser optimization problem in a reasonable time. The full search method will need to find a solution in a space with five dimensions. Blocks with the reference numerals 3, 4 and 5 in Fig. 1, reduce the dimensions to two (one spatial and one temporal) greatly reducing the problem size. A global optimization problem in two dimensions is exponentially faster than one in five dimensions.

The corridor is much larger than previously proposed corridors because it includes all (or almost all) the feasible trajectories. This will give the motion planner more freedom to find trajectories with the largest possible safety margin and trajectories that are the smoothest and most comfortable for the vehicle passengers.

The corridor, in fact, contains an infinite number of trajectories (as opposed to search-tree methods), allowing the solver to choose from a larger solution space. The trajectories are infinite because the time dimension is continuous and the problem is solved in time. Effectively, the solver has infinite options as it selects a solution from a continuous solution space.

The corridor creation also makes the subsequent NLP problem easier to solve by "convexifying" the constraints in block 6 in Fig. 1. In this step a suitable convex or quasi-convex continuous function 503 is used to approximate the drivable space. This approximation can be made arbitrarily, allowing for this method to be safer, as well as mathematically more tractable. In other words, this function represents the lower or upper bound on the width of the grid line in time. So, when executing step 7, space is fixed and then the corridor is represented by having an inequality

$$wmin(t) \;<= w <= wmax(t)$$

where wmin(t) and wmax(t) are both convex or quasi-convex functions of time. Width is the measurement on any specific grid line and connects the corridor to the NLP problem.

Finally, the invention provides the feature of combined lateral and longitudinal vehicle dynamics. By utilizing a vehicle mathematical model with combined lateral and longitudinal dynamics including tire forces, the solution space (and therefore safety) is increased by enlarging the drivable envelope. This is not the case when the longitudinal and lateral dynamics are decoupled (i.e. considered independently)

◦ Utilizing such model increases the computational complexity, but we can restore complexity to manageable levels by other means (see block feature 1)

◦ Changing driving characteristics only involves changing a few parameters, hence this is an easier method to use and to adapt in practice

∘ The method works independently of pre-defined maneuvers such as pre-computed scenarios (typically cruising, following, braking and overtaking). The vehicle has a high degree of autonomy and could deal with scenarios never encountered before.

LIST OF REFERENCE SIGNS

| | | | |
|---|---|---|---|
| 1 | predict vehicle states | 102 | driving reference information |
| 2 | predict future obstacles positions | 103 | obstacles positions |
| | | 301 | road |
| 3 | grid generation | 301' | transformed road |
| 4 | generation of corridor in space and time coordinates | 302 | right edge |
| | | 302' | transformed right edge |
| 5 | selection of a suitable maximally large corridor | 303 | left edge |
| | | 303' | transformed left edge |
| 6 | convexification | 304 | forward edge |
| 7 | solution of the NLP problem with models blending and lateral and longitudinal vehicle dynamics | 305 | backward edge |
| | | 306 | grid line |
| | | 307 | grid line |
| | | 311 | grid at point in time $t_0$ |
| 8 | transformation of coordinates | 311' | grid at point in time $t_1$ |
| 9 | resampling to higher frequencies | 311" | grid at point in time $t_{final}$ |
| | | 316 | interrupted grid portion |
| 11 | vehicle state | 316' | interrupted grid portion |
| 21 | obstacles predictions | 316" | no longer interrupted grid portion |
| 31 | grid | | |
| 41 | drivable space | 317 | grid portion |
| 51 | nonconvex corridor | 317' | interrupted grid portion |
| 61 | mathematically tractable corridor | 317" | interrupted grid portion |
| | | 326' | lower grid portion |
| 71 | motion planning trajectories in curvilinear coordinates | 326" | grid line |
| | | 327 | grid line |
| 81 | motion planning trajectories in Euclidian coordinates | 327" | lower grid portion |
| | | 337 | grid point over time |
| 90 | vehicle | 501 | drivable space |
| 91 | obstacle | 502 | time |
| 92 | motion planning trajectories | 503 | convex (or quasi-convex) and continuous time function |
| 101 | current state information | | |

**Claims**

1. A method for controlling an autonomous or semi-autonomous vehicle, comprising:

providing a global vehicle model, comprising a first slow velocity model, a second high velocity model and model parameter data,
obtaining, by one or more processors, information describing a roadway (301) from a starting position (305) to make progress (304) along the road between a left edge (303) and a right edge (302);
defining (3), by the one or more processors, a plurality of grid lines (306, 307) along the roadway (301) at spaced locations between the starting position (305) and a point that defines progress (304) along the road, each grid line having a width,
**characterized in that**

before defining (3) said plurality of grid lines (31, 306, 307), the information describing the roadway (301) is transformed in a Frenet-Serret frame,
determining (4), by the one or more processors, corridors (316 and 316"; 317' and 317", 316", 317) in space and time (311, 311', 311") coordinates,
determining (5), by the one or more processors, a suitable corridor (327, 327", 326") through optimization,
applying (6), by the one or more processors, driving constraints, especially based on said model parameter data, on the suitable corridor for each grid line in time (311, 311', 311") generating a convex or quasi-convex and continuous time function (503) in the drivable space (501),
providing (7) the trajectory of the vehicle model within the suitable corridor based on Nonlinear Programming (NLP),
transforming (8), by the one or more processors, the convex or quasi-convex and continuous time function (503) into a motion planning trajectory in Euclidian coordinates,
wherein within the step of providing (7) the trajectory information about the velocity of the vehicle (90) is used in a blending step determining the development of the vehicle states over time dx/dt through application of the equation

$$dx/dt = s(v) \times f\_1(x,u) + (1-s(v)) \times f\_2(x,u)$$

where v is the vehicle velocity, x are the vehicle states, u are the vehicle inputs, f_1 is the first and f_2 the second of the two functions describing a first slower velocity vehicle model and a second higher velocity vehicle model, respectively, which are the vehicle models to be blended, and s(v) is a modified sigmoid activation function with the condition, that

$$s(v) = 1 \text{ for } v<=v\_1, s(v) = 0 \text{ for } v>= v\_2$$

where v_1 is a lower threshold velocity, v_2 is an upper threshold velocity and $0 < v\_1 < v\_2$.

2. The method according to claim 1, wherein after the transforming (8) step a resampling (9) step is added resampling the output of the transforming (8) step at a constant predetermined frequency, preferably at a higher frequency than the output frequencies of the trajectory providing (7) step.

3. The method according to claim 2, wherein the resampling (9) step interpolates the output of the transforming (8) step using the vehicle model to calculate the trajectory points that exist between the trajectory points outputted the transforming (8) step.

4. The method according to any one of claims 1 to 3, wherein the step of defining said plurality of grid lines (306, 307) is preceded by an information and prediction step (1) relating to the vehicle (90) comprising the current state (101) of the roadway (301), its velocity and driving reference (102); especially based on the model parameter data of the global vehicle model.

5. The method according to any one of claims 1 to 4, further comprising an obstacle prediction step (2), wherein the step of determining corridors (316 and 316"; 317' and 317", 316", 317) in space and time (311, 311', 311") coordinates uses obstacle data (91) stemming from the obstacle prediction step (2) determining said corridors (316 and 316"; 317' and 317", 316", 317) in space and time (311, 311', 311") coordinates.

6. The method according to any one of claims 1 to 5, wherein at velocities of the vehicle (90) v>=v_2 the model used is the second model, being a nonlinear bicycle vehicle model with simplified Pacejka tire models, eight vehicle states comprising longitudinal force/acceleration, steering angle, v_x, v_y, yaw-rate, s, w, relative heading, and two control inputs being longitudinal jerk and steering rate and wherein at velocities of the vehicle (90) v<=v_1 the model used is the first model, with four states comprising x and y coordinates, velocity and heading and no tire dynamics with related control inputs applying.

7. The method according to any one of claims 1 to 6, wherein the modified sigmoid activation function is $s(v) = 1/(1+e^x)$ for $v > v\_1$ and $v < v\_2$ with a continuous transition to the values at $s(v\_1)$ and $s(v\_2)$.

8. The method according to any one of claims 1 to 7, wherein the modified sigmoid activation function is s(v) = 0.5 + 0.5 sin (min (0.5$\pi$, max (-0.5 $\pi$, v - v_blend))) with v_blend = (v_1 + v_2)/2 with a continuous transition to the values at s(v_1) and s(v_2).

9. The method according to any one of claims 1 to 5, wherein within the blending step a third very high velocity vehicle model is applied with f_3 as function describing this model and a second modifed sigmoid function s2(v), wherein the equations are adapted to

$$dx/dt = s2(v) \times ( s(v) \times f\_1(x,u) + (1-s(v)) \times f\_2(x,u) ) + (1-s2(v)) \times f\_3(x,u)$$

$$s2(v) = 1 \text{ for } v<=v\_2, s(v) = 0 \text{ for } v>= v\_3.$$

10. The method according to any one of claims 1 to 9, wherein the algorithm providing the trajectory of the vehicle model within the suitable corridor comprises a cost function including a cost proportional to the inverse of the distance to other vehicles/obstacles multiplied by the relative velocity with the other vehicles/obstacles.

11. System for controlling an autonomous or semi-autonomous vehicle, comprising a control unit having one or more processors, a memory stocking a global vehicle model comprising at least a first lower velocity vehicle model, a second higher velocity vehicle model and vehicle model parameter, wherein the control unit is adapted to obtain information describing a roadway (301) from a starting position (305) to make progress (304) for said autonomous or semi-autonomous vehicle along the road between a left edge (303) and a right edge (302) and further comprises a software program product for executing any one method according to any one of the method claims 1 to 10.

101 **Current state**

102 **Driving reference**

103 **Obstacles positions**

**1. Predict vehicle states**

**2. Predict future obstacles positions**

11 Vehicle states

21 Obstacles predictions

**3. Generate grid**

Grid 31

**4. Generate corridor in space and time coordinates**

Drivable space 41

**6. Constraints selector (convexification)**

Nonconvex corridor 51

**5. Select suitable corridor**

61 Mathematically tractable corridor

**7. Solve NLP problem with models blending and combined lateral and longitudinal vehicle dynamics**

71 Motion planning trajectories in curvilinear coordinates

**8. Transform coordinates**

81 Motion planning trajectories in Euclidian coordinates

**9. Resample to higher frequency output**

92 Motion planning trajectories at higher update frequency

## FIG. 1

FIG. 2

At time = t_0

At time = t_1

At time = t_final

4. Generate corridor in space and time coordinates

**FIG. 3**

EP 3 885 867 A1

At time = t_0

311

At time = t_1

311'

At time = t_final

311"

5. Select
suitable
corridor
using
optimization

311'

At time = t_0

311

327

326'

At time = t_1

327"  326"

At time = t_final

311"

327  326"

**FIG. 4**

EP 3 885 867 A1

337

For each grid point in the corridor

At time = t_0

6. Constraints
selector
(convexification)

At time = t_1

327"

At time = t_final

327

Drivable
space

Convex and continuous
time function

503

501

502

t_1
t_0

327"

t_final    Time

FIG. 5

Europäisches
Patentamt

European
Patent Office

Office européen
des brevets

# EUROPEAN SEARCH REPORT

**Application Number**

EP 20 16 6258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENG YU ET AL: "A Decoupled Trajectory Planning Framework Based on the Integration of Lattice Searching and Convex Optimization", IEEE ACCESS, vol. 7, 11 September 2019 (2019-09-11), pages 130530-130551, XP011747005, DOI: 10.1109/ACCESS.2019.2940271 [retrieved on 2019-09-20] * the whole document * | 1-11 | INV. G05D1/02 B60W30/00 G08G1/00 G01C21/00 |
| A | PADEN BRIAN ET AL: "A Survey of Motion Planning and Control Techniques for Self-Driving Urban Vehicles", IEEE TRANSACTIONS ON INTELLIGENT VEHICLES, IEEE, vol. 1, no. 1, 1 March 2016 (2016-03-01), pages 33-55, XP011617380, ISSN: 2379-8858, DOI: 10.1109/TIV.2016.2578706 [retrieved on 2016-07-20] * the whole document * | 1-11 | |
| A | WAN WEI ET AL: "Structured regularization for barrier NLP solvers", COMPUTATIONAL OPTIMIZATION AND APPLICATIONS, SPRINGER US, BOSTON, vol. 66, no. 3, 4 October 2016 (2016-10-04), pages 401-424, XP036180230, ISSN: 0926-6003, DOI: 10.1007/S10589-016-9880-7 [retrieved on 2016-10-04] * the whole document * | 1-11 | TECHNICAL FIELDS SEARCHED (IPC) G05D G01C B60W G08G |

The present search report has been drawn up for all claims

| Place of search | Date of completion of the search | Examiner |
|---|---|---|
| Munich | 29 July 2020 | Etienne, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9567915 B1
- US 9645577 B1
- US 2015346723 A1
- US 2015353082 A1
- US 2015345959 A1

**Non-patent literature cited in the description**

- **LINIGER ; DOMAHIDI ; MORARI.** Optimization-based autonomous racing of 1:43 scale RC cars. *Special Issue: Predictive Control for Embedded Systems; in Optimal Control,* September 2015, vol. 36 (5